Europäisches Patentamt

European Patent Office

Office européen des brevets

(19)

(11) Veröffentlichungsnummer: **0 017 622
B1**

(12) # EUROPÄISCHE PATENTSCHRIFT

(45) Veröffentlichungstag der Patentschrift:
07.09.83

(51) Int. Cl.³: **B 01 D 29/14**

(21) Anmeldenummer: **80810109.1**

(22) Anmeldetag: **01.04.80**

(54) **Filtriervorrichtung mit einer Kammer, einem schraubenlinienförmig verlaufenden Träger und einem von diesem gehaltenen Filter.**

(30) Priorität: **04.04.79  CH 3105/79**

(43) Veröffentlichungstag der Anmeldung:
**15.10.80 Patentblatt 80/21**

(45) Bekanntmachung des Hinweises auf die Patenterteilung:
**07.09.83 Patentblatt 83/36**

(84) Benannte Vertragsstaaten:
**AT BE DE FR GB IT LU NL SE**

(56) Entgegenhaltungen:
**CH-A-467 092
FR-A-836 731
GB-A-803 206
NL-C-6 166
US-A-3 935 107**

(73) Patentinhaber: **Filtroba Basel AG, Burgfelderstrasse 24, CH-4055 Basel (CH)**

(72) Erfinder: **Moritz, Eugen, Oberdorfstrasse 13, CH-4125 Riehen (CH)**
Erfinder: **Moritz, Christian, Oberdorfstrasse 13, CH-4125 Riehen (CH)**

(74) Vertreter: **Eder, Carl E. et al, Patentanwaltsbüro Eder & Cie Münchensteinerstrasse 2, CH-4052 Basel (CH)**

Filtriervorrichtung mit einer Kammer, einem schraubenlinienförmig verlaufenden Träger
und einem von diesem gehaltenen Filter

Die Erfindung betrifft eine Filtriervorrichtung gemäß dem Oberbegriff des Anspruchs 1. Eine solche Filtervorrichtung ist z. B. in der Fig. 3 der FR-A-836 731 dargestellt.

Ferner ist aus dem Prospekt der Firma Koehler Bosshardt AG, Basel, »Spiralfilter« eine Filtriervorrichtung bekannt, die eine zylindrische Kammer aufweist, in deren Achse ein Hohlstab angeordnet ist, dessen Hohlraum mit dem Auslaß verbunden ist und der mit über seine Länge verteilten Löchern versehen ist. Ferner ist ein Träger-Stab mit vollem, rundem Querschnitt vorhanden, der schraubenlinienförmig um den Hohlstab herumläuft. Dabei ist zwischen aufeinanderfolgenden Windungen des schraubenlinienförmig verlaufenden Träger-Stabes ein Zwischenraum vorhanden. Ferner ist auch zwischen dem sich in der Kammerachse befindenden Hohlstab und den Windungen des schraubenlinienförmig verlaufenden Träger-Stabes ein Zwischenraum vorhanden. Das Filter wird durch ein Filter-Tuch gebildet. Dieses Tuch wies ursprünglich die Form eines zylindrischen Schlauches auf. Dieser Schlauch wurde dann in Richtung der Kammerachse über den Träger-Stab gestülpt. Danach wurde der Schlauch mit einer schraubenlinienförmig zwischen die Windungen des Träger-Stabes verlaufenden Schnur derart eingeschnürt, daß er zwischen den aufeinanderfolgenden Windungen des Träger-Stabes gegen den entlang der Kammerachse verlaufenden Hohlstab gezogen wird. Das Filter-Tuch bildet dann eine Fläche, die der Außenfläche einer Schraube ähnlich ist. Da jedoch das Filter-Tuch zwischen den Windungen des Träger-Stabes auf einen Durchmesser eingeschnürt wird, der wesentlich kleiner ist als der Durchmesser des ursprünglich durch das Filter-Tuch gebildeten Schlauches, entstehen im Filter-Tuch mehr oder weniger radial verlaufende Falten. Die Größe dieser Falten nimmt dabei von der Peripherie her gegen den Hohlstab hin zu.

Im Prospekt sind sowohl Varianten, bei denen die Kammer mit vertikaler Kammerachse starr in einem Gestell gehalten ist, als auch Varianten geoffenbart, bei denen die Kammer kippbar in einem Gestell gelagert ist, so daß sich die Kammer wahlweise in einer Stellung mit vertikaler Kammerachse oder in eine Stellung mit horizontaler Kammerachse befinden kann. Bei einer der Varianten mit kippbarer Kammer ist diese bei derjenigen Stirnwand, die sich bei vertikaler Kammerachse auf der untern Kammerseite befindet, mit einem außermittigen Auslaß-Stutzen versehen. Die Kippbarkeit soll gemäß dem Prospekt ermöglichen, die Filtration in horizontaler Lage durchzuführen, wogegen der Filtereinbau bei vertikalstehender Kammer erfolgen soll.

Beim Betrieb wird die zu filtrierende Suspension in die Kammer eingeführt. Die flüssige Komponente der Suspension kann dann durch das Oberflächen-Filter und die Löcher im Hohlstab in dessen Hohlraum und durch diesen hindurch zum Filtrat-Auslaß gelangen. Die in der Suspension vorhandenen Feststoffe werden an der Oberfläche des Filter-Tuches zurückgehalten und müssen von Zeit zu Zeit entfernt werden.

Dieses Entfernen der auf der Oberfläche der Filter-Tuches abgelagerten Feststoffe ist nun aber wegen der erwähnten Falten verhältnismäßig schwierig. In der Praxis wird zum Entfernen der Feststoffe entweder das ganze Filter aus der Kammer herausgenommen oder aber die Kammer durchgespült. Beide Verfahren sind umständlich und insbesondere dann sehr nachteilig, wenn die Feststoffe das Nutzprodukt des Filtrationsvorganges bilden.

Ferner haben die Falten des Filters zur Folge, daß sich eine ungleichmäßige Verteilung der ausgeschiedenen Feststoffe auf der Oberfläche des Filter-Tuches ergibt. Dies erhöht die Verstopfungshäufigkeit des Filter-Tuches, so daß die relativ schwierige Entfernung der Feststoffe zudem jeweils nach verhältnimäßig kurzen Betriebsdauern erforderlich ist.

In vielen Fällen, insbesondere wenn die Filtration zur Gewinnung des festen Rückstandes erfolgt, wäre es wünschenswert, während der Filtration mittels eines Druckgases in der Kammer einen Überdruck zu erzeugen. Dies ist beim vorbekannten Filter jedoch praktisch nicht möglich, weil die vom Filter gebildeten Schraubenwindungen sonst weitgehend zusammengedrückt werden.

Die Erfindung hat sich nun die Aufgabe gestellt, eine Filtriervorrichtung zu schaffen, bei der die genannten Nachteile vermieden werden können.

In der französischen Patentschrift 836 731 sind verschiedene Filtriervorrichtungen geoffenbart, die zum Teil ähnliche Filter aufweisen, wie sie aus dem vorgängig diskutierten Prospekt bekannt sind. Ferner ist in der Fig. 3 eine Variante dargestellt, bei der das Filterelement eine hohle Wendel mit kreisförmigen Profil bildet, im übrigen aber nicht näher beschrieben ist. Man mag jedoch vermuten, daß das Filterelement aus einem wendelförmigen Träger und einem von diesem gehaltenen, flexiblen Filter gebildet ist. Das obere Ende des Filterelementes ist mit einem Filtrat-Auslaß verbunden.

Bei der Filtriervorrichtung gemäß der Fig. 3 der französischen Patentschrift 836 731 weist die Kammer auf der Innenseite des wendelförmigen Filterelementes einen freien Hohlraum auf, dessen Durchmesser ungefähr 60% des Kammer-Durchmessers beträgt. Es wird daher nur ein verhältnismäßig kleiner Teil der Grundriß-Fläche der Kammer für die Filtration ausgenutzt. Vorallem ist aber im zentralen Teil der Kammer und auch zwischen dem Filterelement und der Kammerwand ein großer Hohlraum vorhanden, in dem die zu filtrierende Suspension vertikal neben dem Filterelement vorbei von unten nach oben strömen kann. Die Filtriervorrichtung dürfte daher nur einen geringen Wirkungsgrad aufweisen.

Da die Vorrichtung gemäß der Fig. 3 der französischen Patentschrift 836 731 auch keinen Rückstand-Auslaß aufweist, dürfte das Herausnehmen der ausfiltrierten Feststoff-Rückstände und das Reinigen der Kammer und des Filterelementes sehr schwierig und zeitraubend sein. Um das Herausnehmen der Rückstände zu ermöglichen, könnte die Kammer oben mit einem entfernbaren Deckel versehen sein, der dann zum Herausnehmen der Rückstände entfernt werden müßte, so daß die Rückstände nach oben aus der Kammer herausgenommen werden könnten. Wahrscheinlich müßte dann jeweils auch noch das Filter ausgebaut werden.

Da sich der Filtrat-Auslaß bei der Vorrichtung gemäß der Fig. 3 der französischen Patentschrift 836 731 oben an der Kammer befindet, kann das Filtrat am Ende eines Filtriervorganges nicht ohne weiteres vollständig aus dem Filter entnommen werden. Ferner bleibt in der Filterkammer am Ende des Filtriervorgangs immer noch Suspension zurück.

Die oben genannte Aufgabe wird durch eine Filtriervorrichtuntg der einleitend genannten Art gelöst, wobei die Filtriervorrichtung erfindungsgemäß durch die Merkmale des Anspruches 1 gekennzeichnet ist. Weitere zweckmäßige Ausgestaltungen der Erfindung ergeben sich aus den abhängigen Ansprüchen.

Die Erfindung wird nun anhand eines in der Zeichnung dargestellten Ausführungsbeispieles erläutert. In der Zeichnung zeigt die

Fig. 1 eine Ansicht einer Filtriervorrichtung, die

Fig. 2 einen Schnitt entlang der Achse der Kammer der Filtriervorrichtung, in größerem Maßstab, die

Fig. 3 einen Querschnitt durch die Kammer, und zwar oberhalb der untersten Windung der aus einem Träger und dem Oberflächen-Filter gebildeten Wendel, im gleichen Maßstab wie die Fig. 2, die

Fig. 4 einen quer zur Schraubenlinie, der die Wendel entlang verläuft, gelegten Schnitt durch eine Windung der Wendel, in noch größerem Maßstab, die

Fig. 5 eine Draufsicht auf einen Abschnitt des wendelförmigen Trägers ohne das Filter.

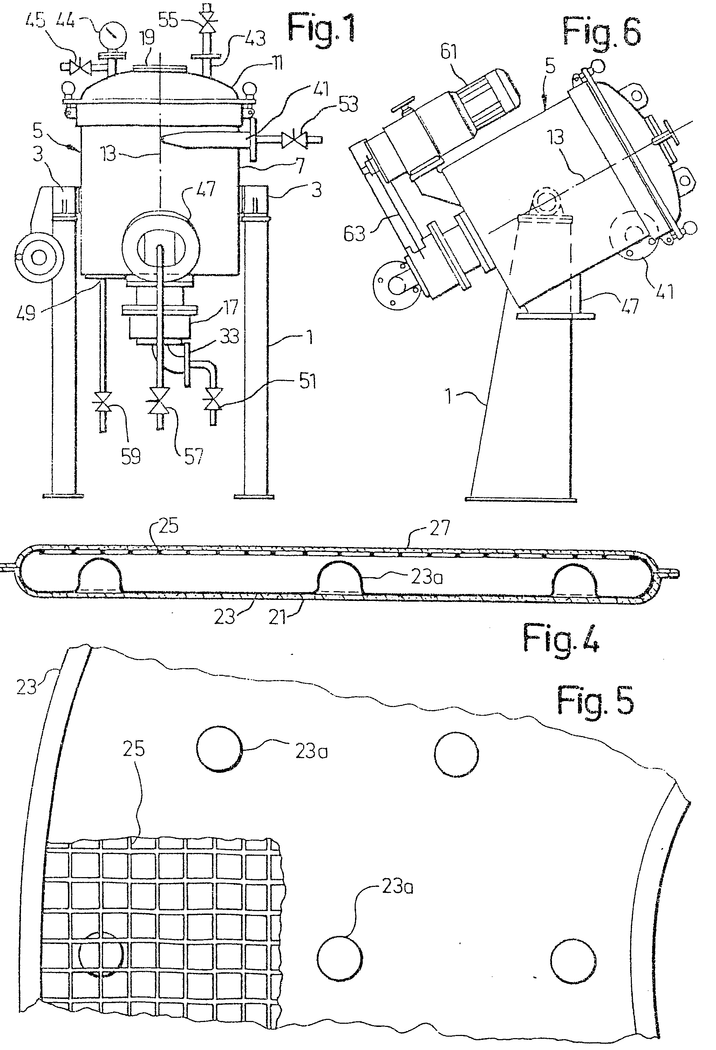

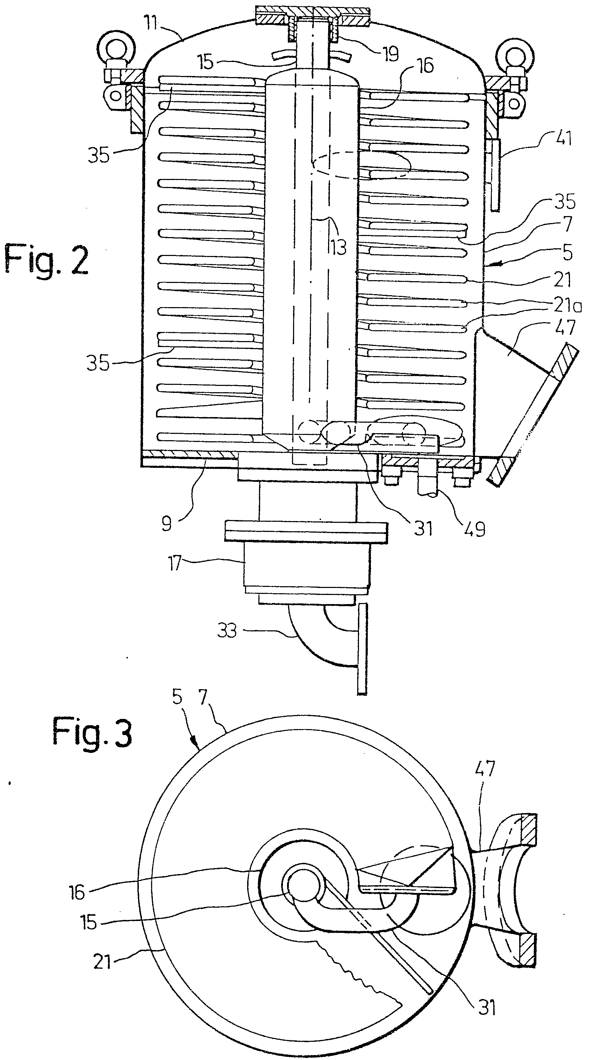

Die in der Fig. 1 ersichtliche Filtriervorrichtung zum Filtrieren von Flüssigkeiten mit suspendierten Feststoffen weist ein Gestell 1 mit zwei Säulen auf, zwischen denen mittels Lagern 3 eine Kammer 5 um eine horizontale Achse kippbar gehalten ist. Diese besonders deutlich in der Fig. 2 ersichtliche Kammer 5 weist einen kreiszylindrischen Mantel 7 auf und ist unten durch einen an diesem angeschweißten Boden 9 und oben durch einen lösbar befestigten, gewölbten Deckel 11 abgeschlossen. Eine entlang der Rotationssymmetrie-Achse 13 der Kammer verlaufende, hohle, im mittleren Teil mit einem Mantel 16 versehene Welle 15 ist mittels dichten Lagern 17, 19 im Boden 9 bzw. Deckel 11 der Kammer 5 drehbar gelagert.

In der Kammer 5 ist eine hohle Wendel 21 angeordnet, die eine Schraubenlinie um die Achse 13 bildet. Die Wendel 21 weist einen besonders deutlich in den Fig. 4 und 5 ersichtlichen Träger 23 auf, der durch eine aus Blech bestehende, oben offene Rinne mit einem Boden und halbkreisförmigen Wänden gebildet ist. Der Boden des Trägers 23 ist mit rundlichen, nach oben gedrückten Dellen 23a oder Sicken versehen, die über den Träger-Boden verteilt sind. Am oberen Rand des Trägers 23 ist noch ein Gitter 25 befestigt, das sich über den Bereich der Rinnen-Öffnung erstreckt und durch die Dellen 23a abgestützt werden kann. Der Träger 23 wird von einem ebenfalls wendelförmigen Schlauch umspannt, der aus Tuch besteht und ein für die zu filtrierende Flüssigkeit durchlässiges, durch das Gitter 25 abgestütztes Oberflächen-Filter 27 bildet. Dieses Oberflächen-Filter hat Poren, deren lichte Weite kleiner ist als diejenige der Öffnungen des Gitters 25 und ist derart ausgebildet, daß es den Träger 23 im wesentlichen faltenfrei umspannt, so daß mindestens der die Öffnung des rinnenförmigen Trägers 23 überdeckende Filter-Teil eine praktisch glatte Fläche bildet. Im übrigen wird das Filter 27 vom Träger 23 gespannt gehalten, ohne daß bei den Längsrändern des rinnenförmigen Trägers irgendwelche besondere Befestigungsmittel oder Dichtungen notwendig sind. Lediglich die beiden Enden des schlauchförmigen Filters werden vorzugsweise gegen Verschiebungen gesichert. Hierzu kann man beispielsweise das untere Ende des Filters mit einer Bride oder einem anderen Halteorgan lösbar und dicht am Träger festklemmen und das obere Ende des schlauchförmigen Filters entweder auch in entsprechender Weise festklemmen und/oder schließen, so daß es sich selbst am freien Ende des Trägers hält.

Wie aus der Fig. 2 ersichtlich ist, ist zwischen den Innenrändern der Windungen 21a der Wendel 21 und den zur Achse 13 koaxialen Mantel 16 der Welle 15 ein freier, spaltförmiger Zwischenraum vorhanden. Ferner ist auch zwischen den Außenrändern der Windungen 21a der Wendel 21 und dem Kammer-Mantel 7 ein kleiner Zwischenraum vorhanden. Des weitern ist die Steigung der Wendel 21 größer als die parallel zur Achse 13 gemessene Querschnittabmessung der Wendel-Windungen, so daß zwischen aufeinanderfolgenden Wendel-Windungen 21a ein freier Zwischenraum vorhanden ist. Die zu aufeinanderfolgenden Windungen 21a der Wendel 21 gehörenden Windungen des Oberflächen-Filters 27 hängen also nur entlang einer Schraubenlinie zusammen und sind in dem in der Fig. 2 ersichtlichen Schnitt durch Zwischenräume voneinander getrennt. Das untere Ende des Trägers 23 ist mit einem Verbindungsstück 31, das besonders deutlich in der Fig. 3 ersichtlich ist, an der hohlen Welle 15 befestigt. Der Hohlraum der letzteren ist mit einem am Boden 9 der Kammer 5 befestigten Filtrat-Auslaß 33 verbunden. Der Hohlraum der Wendel 21 ist oben abgeschlossen und unten durch das Verbindungsstück 31 und den Hohlraum der Welle 15 mit dem Filtrat-Auslaß 33 verbunden und begrenzt also einen schraubenlinienförmigen Durchgang für das Filtrat. Am Mantel 16 sind in verschiedenen Höhen armförmige Stützen 35 befestigt, auf denen die Wendel 21 aufliegt.

Der Träger 23 wird bei der Herstellung aus einzelnen Segmenten zusammengesetzt. Der das Oberflächen-Filter 27 bildende wendelförmige Schlauch wird bei der Herstellung ebenfalls aus seine oberen und unteren Hälften bildenden Tuch-Segmenten zusammengesetzt. Diese Segmente werden dann bei ihren Außen- und Innenrändern sowie bei ihren Stoß-Stellen dicht miteinander verbunden. Der so gebildete Schlauch wird dann von oben her entlang dem Träger 23 über diesen geschoben. Im übrigen sei noch vermerkt, daß die in der Fig. 4 ersichtlichen, ein wenig vom Träger 23 wegragenden, miteinander verbundenen Ränder der Filter-Segmente in der Fig. 2 der Einfachheit halber nicht gezeichnet wurden.

Die Kammer 5 weist im oberen Teil des Kammer-Mantels 7 einen Einlaß 41 für die zu filtrierende Suspension auf. Ferner ist der Deckel 11 mit einem Anschluß 43 für eine Druckgaszuleitung versehen. Des weiteren ist auf dem Deckel noch ein Manometer 44 und ein Überdruckventil 45 angeordnet. Unmittelbar über dem Kammer-Boden 9 ist der Kammer-Mantel 7 mit einem Rückstand-Auslaß 47 versehen. Ferner ist der Boden 9 noch mit einem zusätzlichen Auslaß 49 für den Rest der sich in der Kammer befindenden Flüssigkeit versehen, wobei auch der Kammer-Boden über dem Auslaß 49 mit einem Filter versehen ist. Der Filtrat-Auslaß 33, der Suspensions-Einlaß 41, der Anschluß 43, der Rückstand-Auslaß 47 und der Auslaß 49 sind je durch ein schematisch in der Fig. 1 angedeutetes Ventil 51, 53, 55, 57, 59 abschließbar.

An der Kammer 5 ist ferner noch ein in der Fig. 6 ersichtlicher Motor 61 befestigt, der über ein Getriebe 63 mit der Welle 15 verbunden ist und ermöglicht, diese mitsamt der Wendel 21 zu drehen.

Die Vorrichtung kann sowohl für die Klärfiltration, bei der das Filtrat als Nutzprodukt gewonnen wird, als auch für die Rückstand-Filtration, bei der der Rückstand das Nutzprodukt bildet, verwendet werden.

Wenn die Vorrichtung zum Filtrieren benutzt wird, ist die Kammer 5 in derjenigen Stellung fixiert, in der ihre Achse 13 vertikal verläuft. Ferner sind die Welle 15 und die Wendel 21 ruhend. Des weiteren sind die Ventile 51 und 53 geöffnet. Durch den Einlaß 41 wird nun die zu filtrierende Suspension zugeführt. Die in der Suspension vorhandene Flüssigkeit dringt dann von oben her durch das Oberflächen-Filter 27 hindurch in den rinnenförmigen Träger 23 und strömt diesem entlang zum Filtrat-Auslaß 33. Die in der Suspension enthaltenen Feststoff-Teilchen sammeln sich auf demjenigen Teil des Oberflächen-Filters 27 an, der die Öffnung des Trägers 23 bedeckt. Durch den Anschluß 43 kann während des Filtriervorganges Druckluft oder unter Druck stehender Stickstoff zugeführt werden, wobei das Gitter 25 verhindert, daß das Filter 27 in den rinnenförmigen Träger 23 hineingedrückt wird.

Auf der oberen Oberfläche des Oberflächen-Filters bildet sich also ein Feststoff-Rückstand, der von Zeit zu Zeit entfernt werden muß. Um diesen Rückstand zu entfernen, kann man zunächst die sich noch in der Kammer 5 befindende Rest-Flüssigkeit durch den Auslaß 49 ablassen und dem Filtrat beifügen. Danach wird die Kammer in die in der Fig. 6 dargestellte Stellung gekippt, in der sich der Rückstand-Auslaß 47 ungefähr bei der tiefsten Stelle der Kammer befindet. Ferner werden die Welle 15 und die Wendel 21 mit dem Oberflächen-Filter 27 langsam um die Achse 13 gedreht. Der sich auf dem Oberflächen-Filter befindende Rückstand gelangt infolge der Schwerkraft und unter der Einwirkung der nun als Förderschnecke wirkenden Wendel 21 zum Rückstand-Auslaß 47 und kann durch diesen und das nun geöffnete Ventil 57 entfernt werden.

Da das Oberflächen-Filter, wie erwähnt, im wesentlichen faltenfrei ist, ist bei der Durchführung einer Filtration die ganze obere Oberfläche des Oberflächen-Filters gleichmäßig wirksam. Wegen der Faltenfreiheit des Oberflächenfilters kann der Rückstand in der beschriebenen Weise ohne Schwierigkeiten entfernt werden.

Das flächenhafte, die Feststoffe im wesentlichen auf seiner Oberfläche abscheidende Oberflächen-Filter kann beispielsweise aus einem textilen oder metallischen Gewebe oder einem Filz bestehen. Wie beschrieben, kann das Filter aus einem Schlauch gebildet sein, der den Träger in dem in der Fig. 4 ersichtlichen, quer zur Schraubenlinie, der der Träger entlang verläuft, gelegten Schnitt umschließt. Es wäre jedoch auch möglich, statt eines schlauchförmigen lediglich ein bandförmiges Oberflächen-Filter vorzusehen, das nur die obere, offene Seite des rinnenförmigen Trägers 23 bedeckt. Des weitern könnte man statt des Gitters 25 natürlich auch eine Lochplatte vorsehen, die über ihre Fläche verteilte Durchlaßöffnungen aufweist.

Im übrigen kann man statt des Motors 61 auch eine manuell drehbare Kurbel vorsehen. Insbesondere wenn die Filtriervorrichtung ausschließlich für Klärfiltration vorgesehen ist, kann man überhaupt auf eine drehbare Lagerung und eine Drehung der Wendel verzichten.

Damit beim Einfüllen der zu filtrierenden Suspension wegen der Verdrängung von in der Kammer 5 enthaltener Luft im Innern des relativ dichten Filters 27 keine Luftblasen entstehen können, die das Filter ausbuchten, kann die Kammer vor dem Einfüllen der Suspension durch den Anschluß 43 oder einen zusätzlichen Anschluß evakuiert werden.

Der Hohlraum der Wendel 21 könnte aber auch am unteren Wendelende abgeschlossen werden und statt bei diesem durch das Verbindungsstück 31 durch ein beim oberen Wendelende angeordnetes Verbindungsstück mit einem unten oder oben aus der Kammer herausführenden Filtrat-Auslaß verbunden sein. Bei dieser Ausgestaltung der Vorrichtung kann die Luft beim Einfüllen der Suspension in die Kammer sukzessive durch den Hohlraum der Wendel und das dann beim Einfüllen geöffnete Ventil in der Filtrat-Auslaß-Leitung ausströmen. Dadurch kann ohne vorgängige Evakuierung gewährleistet werden, daß sich beim Einfüllen der Suspension im Innern des Filters keine Luftstauungen bilden, die das Filter ausbuchten könnten.

Ferner braucht das als Stützorgan für das Filter 27 dienende Gitter 25 nicht starr am Träger 23 befestigt zu werden, sondern kann aus mehreren Gitter-Stücken mit parallel zu den Seiten-Wänden des Trägers 23 nach unten abgebogenen Rändern gebildet sein, so daß es von den letzteren lose gehalten wird. Die einzelnen Gitter-Stücke können sich beispielsweise etwa über eine halbe Windung der Wendel 21 erstrecken. Für die Reinigung des Filters 27 und der Wendel 21 können dann zuerst das Filter und danach die einzelnen Gitter-Stücke entlang dem Träger 23 verschoben und bei dessen Ende von diesem getrennt werden.

**Patentansprüche**

1. Filtriervorrichtung mit einer Kammer (5) mit einem Mantel (7), einem Einlaß (41) für das zu filtrierende Gut, einem Filtrat-Auslaß (33) und einer in der Kammer (5) angeordneten, hohlen Wendel (21), die einen schraubenlinienförmig verlaufenden Träger (23), ein von diesem gehaltenes Filter (27) und einen schraubenlinienförmigen, fluidmäßig mit dem Filtrat-Auslaß (33) verbundenen Durchgang aufweist, wobei die zu aufeinanderfolgenden Träger-Windungen (21a) der Wendel (21) gehörenden Abschnitte des Filters (27) in einem Schnitt (Fig. 2) durch die Achse (13), um die die Wendel (21) herumläuft, vollständig durch einen Zwischenraum voneinander getrennt sind, dadurch gekennzeichnet, daß die Kammer (5) mit einem zum Auslassen von zurückgehaltenen Rückständen dienenden Rückstand-Auslaß (47) versehen ist, daß in dem von der Wendel (21) umschlossenen Innenraum-Teil der Kammer (5) ein sich entlang der Achse (13) erstreckender Körper (15, 16) angeordnet ist, daß zwischen dem letzteren und den Innenrändern der Träger-Windungen (21a) sowie zwischen den Außenrändern der Träger-Windungen (21a) und dem Kammer-Mantel (7) spaltförmige Zwischenräume vorhanden sind und daß die Wendel (21) bezüglich der Kammer (5) um die genannte Achse (13) drehbar ist.

2. Filtriervorrichtung nach Anspruch 1, dadurch gekennzeichnet, daß die Träger-Windungen (21a) im genannten Schnitt (Fig. 2) radial zur genannten Achse (13) eine größere Querschnitts-Ausdehnung aufweisen als parallel zur Achse (13).

3. Filtriervorrichtung nach einem der Ansprüche 1 oder 2, dadurch gekennzeichnet, daß die Achse (13) mindestens während des Filtrationsvorganges vertikal verläuft und daß der Träger (23) durch eine Rinne gebildet ist, die auf ihrer oberen Seite flüssigkeitsdurchlässig und vom Filter (27) bedeckt ist, so daß nur auf der oberen Seite der Wendel (21) eine Fläche vorhanden ist, durch die Flüssigkeit in den Durchgang der Wendel (21) eintreten kann und die im genannten Schnitt (Fig. 2) im wesentlichen eben ist und ungefähr radial zur Achse (13) verläuft.

4. Filtriervorrichtung nach einem der Ansprüche 1 bis 3, dadurch gekennzeichnet, daß der Träger (23) ein das Filter (27) abstützendes Stützorgan (25) mit über seine Fläche verteilten Öffnungen aufweist und daß das Filter (27) durch einen sich unterbruchslos entlang der ganzen Wendel (21) erstreckenden, den Träger (23) im Querschnitt (Fig. 2) umschließenden, flexiblen, wendelförmigen Schlauch gebildet ist, der entlang dem Träger (23) auf diesen aufziehbar und von diesem im aufgezogenen Zustand im wesentlichen faltenfrei aufgespannt und abgestützt ist und der an seinen Enden durch Haltemittel derart lösbar gegen Verschiebungen entlang dem Träger (23) gesichert ist, daß er wieder vom Träger (23) abziehbar ist.

5. Filtriervorrichtung nach einen der Ansprüche 1 bis 4, dadurch gekennzeichnet, daß der genannte Körper (15, 16) um die genannte Achse (13) drehbar gelagert ist, daß die Wendel (21) drehfest mit dem genannten Körper (15, 16) verbunden ist und daß der Durchgang der Wendel (21) durch den genannten Körper (15, 16) hindurch mit dem Filtrat-Auslaß (33) verbunden ist.

6. Filtriervorrichtung nach Anspruch 5, dadurch gekennzeichnet, daß die Wendel (21) ausschließlich am einen Ende am drehbaren Körper (15, 16) befestigt ist.

7. Filtriervorrichtung nach Anspruch 6, dadurch gekennzeichnet, daß die Wendel (21) am unteren Ende am drehbaren Körper (15, 16) befestigt ist.

8. Filtriervorrichtung nach einem der Ansprüche 1 bis 7, dadurch gekennzeichnet, daß der Rückstand-Auslaß (47) am Mantel (7) der Kammer (5) angeordnet ist und daß die Kammer (5) kippbar an einem Gestell (1) gehalten ist, so daß sie von einer für die Filtration vorgesehene Stellung, in der die genannte Achse (13) vertikal steht, für die Entnahme der Rückstände in eine Stellung kippbar ist, in der sich der Rückstand-Auslaß (47) ungefähr bei der tiefsten Stelle der Kammer (5) befindet.

9. Filtriervorrichtung nach einem der Ansprüche 1 bis 8, dadurch gekennzeichnet, daß der genannte Körper eine Welle (15) und einen diese, insbesondere im Bereich der Wendel (21), umschließenden Mantel (16) aufweist.

**Claims**

1. Filtering apparatus with a chamber (5) with a casing (7), an inlet (41) for the stock to be filtered, a filtrate outlet (33) and a hollow coil (21), which is arranged in the chamber (5) and which displays a helically extending carrier (23), a filter (27) held by this and a helical passage connected in terms of liquid with the filtrate outlet (33), wherein the portions of the filter (27), which belong to successive carrier turns (21a) of the coil (21), are completely separated one from the other by a gap in a section (Fig. 2) through the axis (13), around which the coil (21) runs, characterised thereby, that the chamber (5) is provided with a residue outlet (47) serving for the discharging of retained residues, that a body (15, 16) extending along the axis (13) is arranged in that part of the interior space of the chamber (5), which is enclosed by the coil (21), that gap-shaped interstices are present between the body (15, 16) and the inside edges of the carrier turns (21a) as well as between the outside edges of the carrier turns (21a) and the chamber casing (7) and that the coil (21) is rotatable with respect to the chamber (5) around the named axis (13).

2. Filtering apparatus according to claim 1, characterised thereby, that the carrier turns (21a) in the named section (Fig. 2) display a greater cross-sectional extent radially of the named axis (13) than parallelly to the axis (13).

3. Filtering apparatus according to one of the claims 1 or 2, characterised thereby, that the axis (13) extends vertically at least during the filtration process and that the carrier (23) is formed by a channel which on its upper side is permeable by liquid and covered by the filter (27) so that an area, which in the named section (Fig. 2) is substantially planar and extends approximately radially of the axis (13) and through which the liquid can enter into the passage of the coil (21), is present only on the upper side of the coil (21).

4. Filtering apparatus according to one of the claims 1 to 3, characterised thereby, that the carrier (23) displays a supporting organ (25) supporting the filter (27) and having openings distributed over its area and that the filter (27) is formed by a flexible coiled hose which extends uninterruptedly along the entire coil (21), encloses the carrier (23) in cross-section (Fig. 2), can be drawn along the carrier (23) onto this, is in the wound-up state supported and spread out substantially free of folds by this and which is secured by holding means at its ends detachably in such a manner against displacements along the carrier (23) that it can again be drawn off from the carrier (23).

5. Filtering apparatus according to one of the claims 1 to 4, characterised thereby, that the named body (15, 16) is borne to be rotatable about the named axis (13), that the coil (21) is connected secure against rotation with the named body (15, 16) and that the passage of the coil (21) is connected through the named body (15, 16) with the filtrate outlet (33).

6. Filtering apparatus according to claim 5, characterised thereby, that the coil (21) is fastened exclusively at one end to the rotatable body (15, 16).

7. Filtering apparatus according to claim 5, characterised thereby, that the coil (21) is fastened at the lower end to the rotatable body (15, 16).

8. Filtering apparatus according to one of the claims 1 to 7, characterised thereby, that the residue outlet (47) is arranged at the casing (7) of the chamber (5) and that the chamber (5) is held tiltably at a frame (1) so that it is tiltable from a setting, which is envisaged for the filtration an in which the named axis (13) stands vertically, into a setting, in which the residue outlet (47) is disposed approximately at the lowest point of the chamber (5), for the removal of the residues.

9. Filtering apparatus according to one of the claims 1 to 8, characterised thereby, that the named body displays a shaft (15) and a casing (16) enclosing this particularly in the region of the coil (21).

**Revendications**

1. Dispositif de filtration comportant une chambre (5) munie d'une paroi latérale (7), d'une entrée (41) pour le produit à filtrer, d'une sortie de filtrat (33) et d'une hélice creuse (21) qui est disposée dans la chambre (5) et qui comporte un support (23) d'allure hélicoïdale, un filtre (27) porté par celui-ci et un passage hélicoïdal en communication de fluide avec la sortie de filtrat (33), dispositif dans lequel les sections du filtre (27), appartenant à des spires de support successives (21a) de l'hélice (21), sont complètement séparées l'une de l'autre par un intervalle, en une coupe (fig. 2) par l'axe (13) autour duquel est décrite l'hélice (21), caractérisé en ce que la chambre (5) est munie d'une sortie de rétentat (47) servant à l'évacuation des matières retenues, en ce qu'un corps (15, 16), s'étendant le long de l'axe (13), est disposé dans la partie de l'intérieur de la chambre (5) qui est entourée par l'hélice (21), en ce que des intervalles en forme de fentes existent entre le corps (15, 16) et les bords intérieurs des spires de support (21a) ainsi qu'entre les bords extérieurs des spires de support (21a) et la paroi latérale (7) de la chambre (5) et en ce que l'hélice (21) est capable de tourner par rapport à la chambre (5) autour du susdit axe (13).

2. Dispositif de filtration selon la revendication 1, caractérisé en ce que, dans la susdite coupe (fig. 2), les spires de support (21a) ont, en section, une plus grande étendue radialement par rapport au susdit axe (13) que parallèlement à cet axe (13).

3. Dispositif de filtration selon l'une des revendications 1 et 2, caractérisé en ce que l'axe (13) est disposé verticalement, au moins pendant les opétations de filtration, et en ce que le support (23) est constitué par un bac qui, à sa partie supérieure, est perméable aux liquides et recouvert par le filtre (27) si bien que c'est seulement à la face supérieure de l'hélice (21) qu'il se présente une surface à travers laquelle le liquide peut pénétrer dans le passage de l'hélice (21), laquelle surface est pratiquement plane dans la susdite coupe (Fig. 2) et est orientée à peu près radialement par rapport à l'axe (13).

4. Dispositif de filtration selon l'une des revendications 1 à 3, caractérisé en ce que le support (23) comporte un organe d'appui (25) soutenant le filtre (27) et muni d'orifices répartis sur sa surface et en ce que le filtre (27) est constitué par un manchon hélicoïdal flexible qui s'étend sans interruption tout le long de l'hélice (21) et qui entoure le support (23) en coupe transversale (fig. 2), lequel manchon est capable d'être relevé sur le support (27), le long de celui-ci, et est tendu et supporté par celui-ci pratiquement sans pli, à l'état relevé, ce manchon étant empêché de glisser le long du support (23) par des moyens de retenue détachables, adaptés à ses extrémités, de façon telle qu'il puisse être retiré du support (23).

5. Dispositif de filtration selon l'une des revendications 1 à 4, caractérisé en ce que le susdit corps (15, 16) est monté de façon à pouvoir tourner autour du susdit axe (13), en ce que l'hélice (21) est solidarisée en rotation avec ledit corps (15, 16) et en ce que le passage de l'hélice (21) est relié à la sortie de filtrat (33) par traversée dudit corps (15, 16) dans sa longueur.

6. Dispositif de filtration selon la revendication 5, caractérisé en ce que l'hélice (21) est fixée au corps rotatif (15, 16) exclusivement par l'une de ses extrémités.

7. Dispositif de filtration selon la revendication 6, caractérisé en ce que l'hélice (21) est fixée au corps rotatif (15, 16) par son extrémité inférieure.

8. Dispositif de filtration selon l'une des revendications 1 à 7, caractérisé en ce que la sortie de rétentat (47) est disposée sur la paroi latérale (7) de la chambre (5) et en ce que la chambre (5) est montée sur un châssis (1) de façon à pouvoir basculer de sorte qu'on peut la faire basculer d'une position prévue pour la filtration, position dans laquelle le susdit axe (13) se présente verticalement, à une position, pour l'extraction du rétentat, dans laquelle la sortie de rétentat (47) se trouve à peu près au point le plus bas de la chambre (5).

9. Dispositif de filtration selon l'une des revendications 1 à 8, caractérisé en ce que ledit corps comporte un arbre (15) et une paroi latérale (16) qui entoure celui-ci, en particulier au niveau de l'hélice (21).

**Fig.1**

**Fig. 6**

**Fig.4**

**Fig. 5**

0 017 622

Fig. 2

Fig. 3